(19) **Europäisches Patentamt European Patent Office Office européen des brevets**

(11) **EP 4 700 672 A1**

(12) **EUROPEAN PATENT APPLICATION**

(43) Date of publication:
25.02.2026 Bulletin 2026/09

(21) Application number: 25180424.1

(22) Date of filing: 03.06.2025

(51) International Patent Classification (IPC):
*G06Q 10/0637* (2023.01)    *G06Q 30/0201* (2023.01)
*G06Q 40/06* (2012.01)

(52) Cooperative Patent Classification (CPC):
G06Q 10/06375; G06Q 30/0206; G06Q 40/06

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 20.08.2024 JP 2024139039

(71) Applicant: Hitachi, Ltd.
Tokyo 100-8280 (JP)

(72) Inventors:
• NISHIDE, Akinori
Tokyo, 100-8280 (JP)

• TANABE, Yosuke
Tokyo, 100-8280 (JP)
• WATANABE, Koichi
Tokyo, 100-8280 (JP)
• KATO, Takeshi
Tokyo, 100-8280 (JP)
• MIYAKOSHI, Junichi
Tokyo, 100-8280 (JP)

(74) Representative: MERH-IP Matias Erny Reichl
Hoffmann
Patentanwälte PartG mbB
Paul-Heyse-Straße 29
80336 München (DE)

(54) **DATA EVALUATION DEVICE AND DATA EVALUATION METHOD**

(57)    Non-financial value of a corporation is accurately evaluated with spatial propagation of an influence that corporate activities have on the environment taken into consideration.

A data evaluation device (1) of the present invention includes an information integration section (22) that generates a first constraint model representing natural resilience of ecosystem functions in an analysis target region, an influence that an analysis target corporation has on the ecosystem functions, and a first propagation path of interaction of the ecosystem functions between the analysis target regions and generates a second constraint model representing a second propagation path of an influence that business activities of the analysis target corporation have on the ecosystem functions through a supply chain. The data evaluation device (1) includes also an imputed price calculation section (23) that calculates an imputed price of the business activities of the analysis target corporation under a constraint condition including an influence on the ecosystem functions through the first propagation path and the second propagation path by using a utility function including two variables of the economic scale of the analysis target region and abundance of an ecosystem in the analysis target region, and an output section (24) that displays the imputed price.

FIG. 1

**Description**

BACKGROUND OF THE INVENTION

1. Field of the Invention

The present invention relates to a data evaluation device and a data evaluation method for evaluating an influence that economic activities of a corporation have on the environment.

2. Description of the Related Art

In recent years, both domestically and internationally, development of laws for disclosure of environmental data regarding economic activities has been advanced, and collection and management of the environmental data has been made mandatory. If efforts made by a corporation regarding the environment are evaluated as non-financial value, the corporation can acquire qualifications for bidding at government offices and procure funds with an advantageous condition. Investors can directly provide investment or loans to such a corporation, or purchase a financial product including a stock or the like of such a corporation.

As an index to determine the non-financial value, the price book-value ratio (PBR) exists. The PBR is calculated by "PBR = share price/net assets per share." Although the PBR should be "1" in theory, actually it is not 1 in many cases. In a case of PBR > 1, investors that participate in the stock market implicitly evaluate another type of value that does not appear as financial value (non-financial value ≈ efforts for the environment). If quantitative evaluation of the non-financial value that cannot be expressed by the PBR exists, investors can easily make an investment decision.

A system for quantifying non-financial information and evaluating corporate value according to JP-2023-058857-A (hereinafter, Patent Document 1) acquires ESG score data including an E score, an S score, and a G score relating to the environment (E), society (S), and corporate governance (G), respectively, of a target corporation derived by an evaluation organization. This system executes multiple regression analysis by using the E score, the S score, and the G score as explanatory variables and using the percentage of the non-financial risk as an explained variable. A biodiversity evaluation index calculation device of PCT Patent Publication No. WO2013/141252 (hereinafter, Patent Document 2) calculates biodiversity value as an influence that mining has on a surrounding environment of a mine.

SUMMARY OF THE INVENTION

To execute the quantitative evaluation of the non-financial value in corporate activities, non-financial value leading to social benefits of stakeholders is required to be quantitatively evaluated. In this case, when an influence that the corporate activities have on the ecosystem is evaluated, accurate evaluation is not obtained if, for example, spatial propagation of the influence through a supply chain is not taken into consideration. However, in the invention of Patent Document 1 and that of Patent Document 2, the spatial propagation of the influence that corporate activities have on the environment is not taken into consideration in evaluating the non-financial value of a corporation.

Hence, the present invention intends to accurately evaluate non-financial value of a corporation with spatial propagation of an influence that corporate activities have on the environment taken into consideration.

A data evaluation device of the present invention includes a collection section that collects first data relating to business activities of an analysis target corporation, second data relating to an environmental ecosystem, and third data relating to social capital. The data evaluation device includes also an information integration section that generates a function of region-ecosystem functions expressing ecosystem functions in an analysis target region, as a function of a time point and a spot, on the basis of the second data, and generates a function of corporation-ecosystem functions expressing an influence that the analysis target corporation has on the ecosystem functions in the analysis target region, as a function of the time point and the spot, on the basis of the first data and the second data. The information integration section generates a first constraint model representing natural resilience of the ecosystem functions in the analysis target region, the influence that the analysis target corporation has on the ecosystem functions, and a first propagation path of interaction of the ecosystem functions between the analysis target regions and generates a second constraint model representing a second propagation path of an influence that the business activities of the analysis target corporation have on the ecosystem functions through a supply chain, on the basis of the first data and the third data. The data evaluation device includes also an imputed price calculation section that calculates an imputed price of the business activities of the analysis target corporation under a constraint condition including an influence on the ecosystem functions through the first propagation path and the second propagation path by using a utility function including two variables of economic scale of the analysis target region and abundance of an ecosystem in the analysis target region, and an output section that displays the imputed price.

Other measures are described in description of an embodiment of the present invention.

According to the present invention, non-financial value of the corporation can be accurately evaluated with spatial propagation of the influence that the corporate activities have on the environment taken into consideration.

BRIEF DESCRIPTION OF THE DRAWINGS

FIG. 1 is a diagram depicting a configuration of a data evaluation device;
FIG. 2 is a diagram for explaining a landscape of an analysis target region;
FIG. 3 is a diagram for explaining a network structure of the analysis target region;
FIG. 4 depicts an example of environmental information;
FIG. 5 depicts an example of land use information;
FIG. 6 depicts an example of conservation area information;
FIG. 7 depicts an example of economic capital information;
FIG. 8 is a schematic diagram of a first propagation path and a second propagation path;
FIG. 9 is a diagram for explaining the propagation distance of the first propagation path and the second propagation path;
FIG. 10 is a relation diagram between conservation target spots of the first propagation path and the second propagation path;
FIG. 11 is a flowchart for explaining a mechanism of market equilibrium;
FIG. 12 is a flowchart of a processing procedure in the present embodiment; and
FIG. 13 is a diagram for explaining interaction between spots on the first propagation path.

DESCRIPTION OF THE PREFERRED EMBODIMENT

In the following, a description is given of terms used for an embodiment of the present invention (referred to also as the "present embodiment"). Subsequently, the present embodiment itself is described in detail according to the drawings.

(Terms)

"Imputed price" refers to the totality of value that should be imputed to a corporation, and includes not only financial value but also non-financial value such as contribution to the environment. The reason why this totality of value is referred to as not "imputed value" but "imputed price" is solely because of a practice in economics and the like. The imputed price is referred to as "Lagrange multiplier" mathematically (details are described later).
"Business activities" refer to approaches made as business by a corporation, and include approaches to an environmental ecosystem to be described later.
"Environmental ecosystem" refers to an organic (life is reproduced) part in nature surrounding humans, and is, for example, a forest, a river, a sea/lake, or the like. In a strict sense, humans themselves are also part of nature. However, in the present embodiment, humans (corporation and household) are a subject having an influence on the environmental ecosystem as an object.
"Ecosystem functions" refer to what are obtained by quantifying functions that an ecosystem such as a forest and a river has. These functions include a wide variety of functions such as storage of carbon, absorption of carbon dioxide, water control, and transportation of nutrient salt.
"Propagation" refers to a phenomenon in which a change in the ecosystem functions at a certain spot causes a change in the ecosystem functions at another spot over time. Propagation is not necessarily made from a start point to an end point in a one-to-one relation. Propagation is made in the opposite direction between two spots in some cases, and the propagation is made to one spot from a plurality of other spots in other cases.
"First propagation path" refers to a path of propagation as natural workings unique to the environmental ecosystem or workings of the environmental ecosystem affected by the business activities. Examples of the first propagation path include a path in a case in which, as a result of transportation of soil from the upstream side of a river to the downstream side of the river, the nutrient salt concentration on the upstream side lowers and the nutrient salt concentration on the downstream side increases. The distance between two spots coupled through the first propagation path is relatively short, and the two spots are mutually adjacent in many cases.
"Second propagation path" refers to a path of propagation attributable to the business activity (deal) in a goods market and a production factor market. Examples of the second propagation path include a path in the following case. A certain corporation logs wood from a forest and sends the wood to another corporation at a remote place, and the other corporation consumes the wood as a fuel or a material. As a result, the amount of carbon storage of the forest decreases, and the carbon dioxide concentration at the remote place increases. The distance between two spots coupled through the second propagation path is relatively long, and the two spots are spatially distant in many cases. The second propagation path is a path of an influence that the business activity of an analysis target corporation has on the ecosystem functions through a supply chain. The supply chain is frequently expressed by a chain of "procurement of raw material → manufacturing of product → transportation of product → consumption of product → disposal of product." A change in the ecosystem functions occurs at each stage.

(Configuration of Data Evaluation Device)

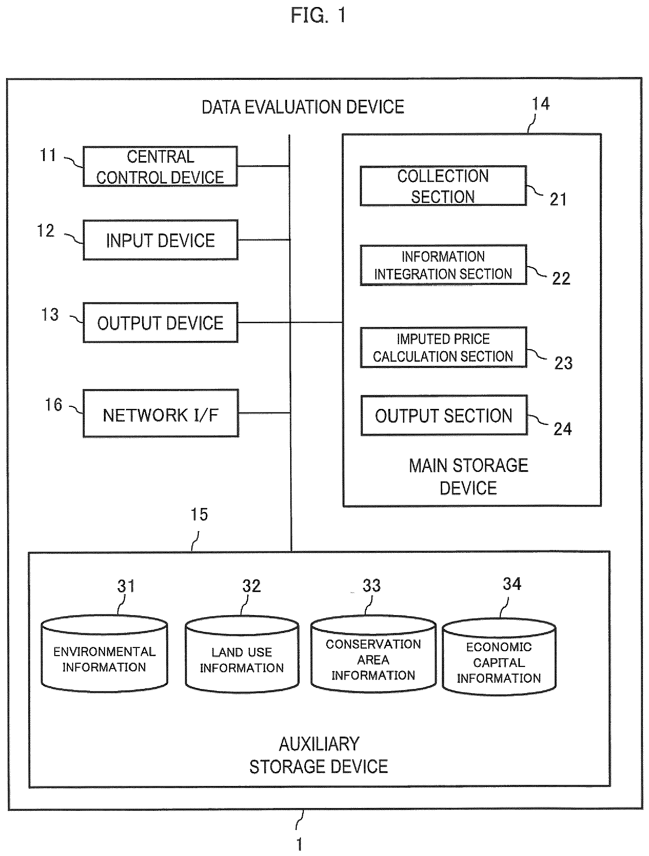

FIG. 1 is a diagram depicting a configuration of a data evaluation device 1. The data evaluation device 1 is a general computer, and includes a central control device 11, an input device 12 such as a keyboard and a mouse, an output device 13 such as a display, a main storage device 14, an auxiliary storage device 15, and a network interface (I/F) 16. These components are mutually connected by a bus.

A collection section 21, an information integration section 22, an imputed price calculation section 23, and an output section 24 described in the main storage device 14 are programs. In the following description, when an "XX section" is described as a subject, this means that the central control device 11 executes processing described in each program in advance by reading out each program stored in the auxiliary storage device 15 into the main storage device 14. The auxiliary storage device 15 stores environmental information 31, land use information 32, conservation area information 33, and economic capital information 34 (all are described in detail later).

The data evaluation device 1 is not required to include all configurations in one casing as in FIG. 1, and all or part of the configurations may be distributed into virtual resources such as a cloud server. As a result, the data evaluation device 1 may include a plurality of computation devices and a plurality of storage devices.

(Landscape of Analysis Target Region)

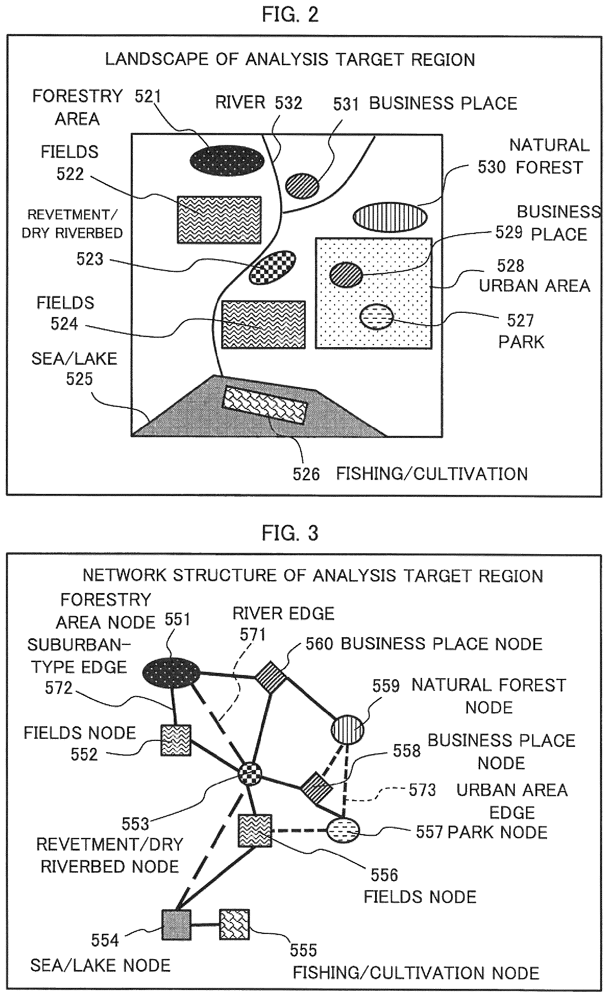

FIG. 2 is a diagram for explaining a landscape of an analysis target region. In the analysis target region (referred to also as the "conservation target region"), a natural forest 530, a river 532, and a sea/lake 525 exist as an environmental ecosystem. Besides, as hubs of business activities, a forestry area 521, fields 522 and 524, a revetment/dry riverbed 523, an urban area 528, business places 529 and 531, a park 527, and fishing/cultivation 526 exist.

(Network Structure of Analysis Target Region)

FIG. 3 is a diagram for explaining a network structure of the analysis target region. In FIG. 3, the environmental ecosystem and the hubs of business activities in FIG. 2 are replaced by a plurality of kinds of nodes 551 through 560. The size of the node indicates the magnitude of the ecosystem functions. Edges 571 through 573 between the nodes indicate the first propagation path (for example, the "river edge") or the second propagation path (for example, the "urban area edge").

(Environmental Information)

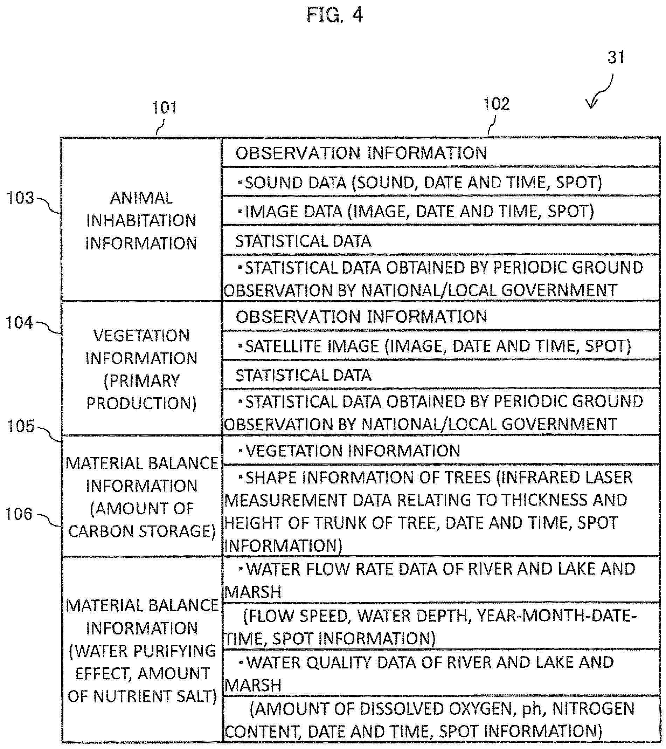

FIG. 4 depicts an example of the environmental information 31. The environmental information 31 indicates information on an ecosystem in a conservation target region including a plurality of conservation target spots. A column 101 indicates the type of information. A column 102 indicates specific data of various types of information. The environmental information 31 can include, for example, animal inhabitation information (row 103), vegetation information of primary production (row 104), information on material balance relating to the amount of carbon storage (row 105), and information on material balance relating to the amount of nutrient salt (row 106).

The animal inhabitation information (row 103) can include observation information on animals living in the conservation target region and existing statistical data. The observation information is, for example, data obtained by observation by a person, and can include sound data and image data. The sound data and the image data can include information on observation date and time and a spot. The statistical data is, for example, statistical data that is obtained by periodic ground observation by a national/local government (for example, Ministry of the Environment) and is provided to the public. Information on the habitat range of various kinds of animals can be obtained from the animal inhabitation information. For example, the information on the animal habitat range gives information on an edge that links ecosystems at different conservation target spots.

The vegetation information (row 104) can include observation information on plants in the conservation target region and existing statistical data. The observation information is, for example, a satellite image, and can include information on shooting date and time and a spot of the image. The statistical data is, for example, statistical data that is obtained by periodic ground observation by a national/local government (for example, Ministry of the Environment and Geospatial Information Authority of Japan) and is provided to the public. Information relating to the habitat range of various kinds of plants (distribution of plants), the density thereof, and primary production can be obtained from the vegetation information.

The material balance information relating to the amount of carbon storage (row 105) indicates information necessary for estimating the amount of carbon storage at each spot in the conservation target region, and includes vegetation information on trees in the conservation target region and shape information on trees at each spot. The shape information on trees can include infrared laser measurement data relating to the thickness and height of the trunk of the tree and acquisition date and time and an acquisition spot of these pieces of data. Moreover, as a method for estimating the amount of carbon storage, there is a method in which the concentration of organic substances in soil is estimated by a chemical analysis and the area of the conservation target region is multiplied by the concentration to estimate the amount of carbon storage. The amount of carbon stored in trees and the like at each spot in the conservation target region and the circulation amount of carbon dioxide can be estimated from the material balance information relating to the amount of carbon storage.

The material balance information relating to the amount of nutrient salt (row 106) indicates information necessary for estimating the amount of nutrient salt at each spot in the conservation target region, and includes water flow rate data of a river and lake and marsh in the conservation target region and water quality data of the river and the lake and marsh. The water flow rate data can include, for example, the flow speed, the water depth, and acquisition date and time and an acquisition spot of the data. The water quality data can include the amount of dissolved oxygen, ph (hydrogen ion concentration), the nitrogen content, and acquisition date and time and an acquisition spot of data of these indexes representing chemical properties. A purifying effect and the amount of nutrient salt concerning each lake/marsh area can be estimated from the material balance information relating to the amount of nutrient salt. Moreover, the amount of nitrogen load transported by the river gives information on an edge that links ecosystems at different spots.

(Land Use Information)

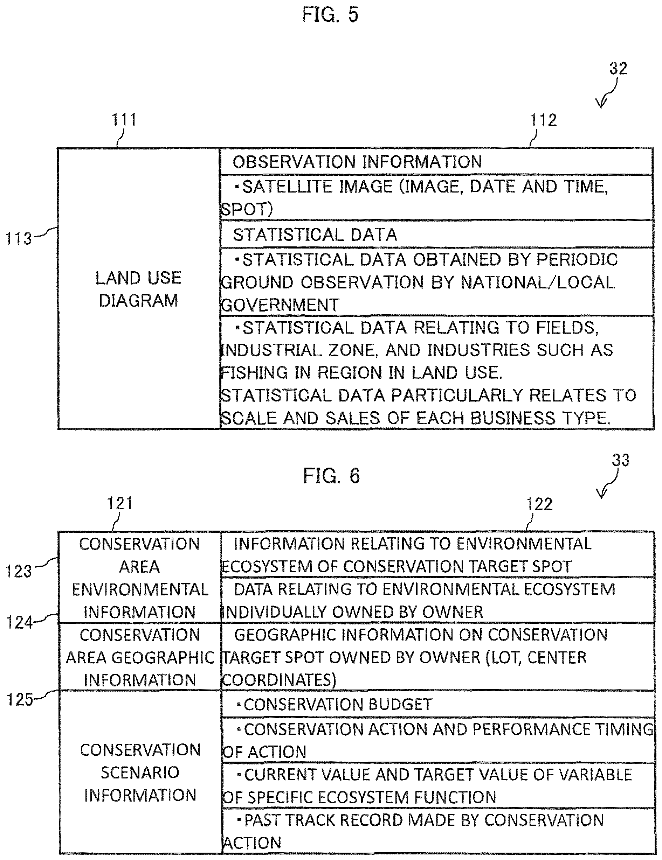

FIG. 5 depicts an example of the land use information 32. The land use information 32 indicates information on land use of the conservation target region. A column 111 indicates the type of information. A column 112 indicates specific data. The land use information 32 can include information on a land use diagram (row 113). The land use diagram indicates the types of zones, and indicates, for example, an urban area, various farmlands, a forest, a river, and the like.

The information on the land use diagram (row 113) can include existing observation information and statistical data. The observation information is, for example, a satellite image, and includes information on acquisition date and time and a spot of the image. The observation data can include information manually obtained on the ground. The statistical data is, for example, statistical data that is obtained by periodic ground observation by a national/local government (for example, Geospatial Information Authority of Japan) and is provided to the public.

(Conservation Area Information)

FIG. 6 depicts an example of the conservation area information 33. The conservation area information 33 indicates information relating to each of conservation target spots located in the conservation target region. Conservation is any kind of action performed for an environmental ecosystem by a human, and an object thereof includes preservation of the environmental ecosystem in the current state, improvement (including recovery), suppression of deterioration, or the like. The conservation area information 33 as the one depicted in FIG. 6 exists for each conservation target spot. Information on some of the conservation target spots may be absent. The conservation area information 33 of each conservation target spot can be collected from an owner of the conservation target spot. A column 121 indicates the type of information. A column 122 indicates specific data. The conservation area information 33 of each conservation target spot can include conservation area environmental information (row 123), conservation area geographic information (row 124), and conservation scenario information (row 125).

The conservation area environmental information (row 123) indicates environmental information on the conservation target spot. Specifically, the conservation area environmental information can include information relating to the ecosystem of the conservation target spot and data relating to the environmental ecosystem individually owned by an owner of the conservation target spot.

The conservation area geographic information (row 124) can include geographic information on the conservation target spot owned by the owner, for example, a lot and the center coordinates on a map concerning the conservation target spot.

The conservation scenario information (row 125) includes one or multiple scenarios of conservation action (conservation scenarios) in the future for the conservation target spot.

Each conservation scenario can include, for example, information on conservation budget, conservation action, the performance timing of the conservation action, and a current value and a target value of a variable of a specific ecosystem function. The conservation budget and the conservation action are given for the whole of the conservation target spot or for each ecosystem function of the conservation target spot. The conservation budget is, for example, a budget for one year spent for conservation. The conservation action is, for example, a matter that can be performed for preservation and improvement of the environment and preservation and improvement of the ecosystem. For example, the conservation action is performed at a specific time point in one year, and the budget is assigned to each conservation action within the annual budget.

As an example of the conservation scenario, a conservation scenario in a case in which the conservation target spot is a park is conceivable. The conservation scenario can include preservation of the environment and preservation and improvement of the ecosystem. The preservation of the environment includes, for example, pruning of trees, removal of dead plants, and maintenance and management of a water system in the park. The maintenance of the water system (environment) is, for example, removal of waste at the bottom of a pond, and the like. The preservation and improvement of the environmental ecosystem is monitoring and check of improvement (target value) concerning chemical properties of soil and the water system in the park. The conservation scenario includes information on the performance timing and the performance scale (budget) of the conservation action.

As another example of the conservation scenario, a conservation scenario in a case in which the conservation target spot is a private land of a corporation is conceivable. Greenery areas scattered among buildings in the city center and a forest and a water system existing in a business place in a suburban area are also conservation targets, and conservation action and budget required for preservation and improvement of each conservation target exist.

As another example of the conservation scenario, a conservation scenario in a case in which the conservation target spot is a deserted arable land is conceivable. Action (improvement) of bringing an artificially abandoned environment like the deserted arable land close to a natural state is included in the conservation in the present embodiment. Action of restoring a spot that has become an economically negative asset and causing the spot to have value as natural capital as described above is included in the conservation, and the performance timing and the budget (performance scale) of the conservation action are included in the conservation scenario.

As described above, the conservation scenario includes the information on the current value and the target value of the variable of the specific ecosystem function. The ecosystem function is a physical or chemical reaction in which living organisms are involved, and thus can be represented by a variable that can be quantified as the existence or input/output of energy or a substance. Examples of the ecosystem function include preservation and purification of the water quality by a water system and soil, carbon storage and photosynthesis by a forest, and storage of a nutrient source by primary production by plants, planktons, and the like.

An example of measurement of the ecosystem function is measurement of movement of a chemical substance. In a case of the water quality, a model of ecosystem functions Q can be defined with use of the input/output amount of chemical substances representing the water quality as an index. For example, for the amount of carbon storage and photosynthesis concerning a forest, an estimation model can be generated with the input/output amount of carbon. For the primary production, an estimation model can be generated with the input/output amount of nitrogen. The ecosystem functions Q are defined on the basis of such models.

For example, the conservation scenario for improvement of the water quality employs, as target values, indexes (variables) indicating the purity of the water quality, such as pH, the amount of dissolved oxygen, the total nitrogen concentration, the total phosphorus concentration, the biochemical oxygen demand (BOD), and the chemical oxygen demand (COD), and indicates conservation action for the target values and the budget thereof.

As another example, the conservation scenario for a forest employs the amount of carbon storage of the forest as a target value, and indicates conservation action for the target value and the budget thereof. Examples of improvement of the amount of carbon storage include improvement of the vegetation distribution for increasing the amount of carbon storage of planted trees and soil.

Another example of the conservation scenario aims at widening the activity range of animals or maintaining the existing activity range, and indicates conservation action of preservation of greenery areas and construction of new greenery areas and the timing and the budget thereof. Examples of the greenery area that supports activities of animals include a greenery area among buildings in the city center and a forest or a greenery area in a park or at a riverside of a river. For example, preservation and improvement can be checked by monitoring of birds and insects (variables of ecosystem functions).

The conservation scenario information (row 125) can further include information on a past track record of the conservation action for the conservation target spot. Similarly to the information on the future conservation scenario, the past track record can include conservation budget, conservation action and the performance timing thereof, and values before and after the conservation action concerning a variable of a specific ecosystem function. The past track record makes it possible to more accurately estimate a change in variables of the ecosystem functions at the conservation target spot based on the future conservation scenario. By using this past track record, a function $Q(t)$ of a time point representing the ecosystem functions, which is described later, can be estimated more accurately. As methods for the estimation, there are methods of estimation of a function form by statistical processing, estimation by machine learning, and the like.

(Economic Capital Information)

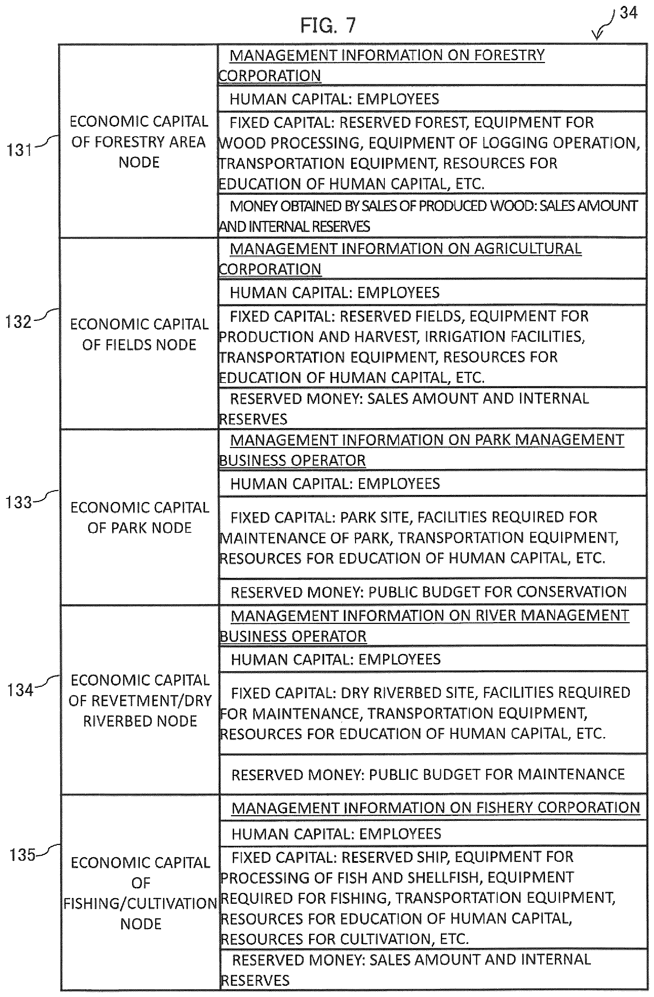

FIG. 7 depicts an example of the economic capital information 34.

Economic capital of a forestry area node (row 131) is the total of human capital required for forestry, fixed capital and lands, and money obtained by sales of wood produced by using them, and appears in financial information on the forestry.

Economic capital of a fields node (row 132) is the total of human capital required for production in fields, fixed capital and lands, and money obtained by sales of food produced by using them, and appears in financial information on agriculture.

Economic capital of a park node (row 133) is the total of human capital required for maintenance of a park, fixed capital and lands, and budget for maintaining them, and appears in financial information on park maintenance.

Economic capital of a revetment/dry riverbed node (row 134) is the total of human capital required for maintenance of a revetment and a dry riverbed, fixed capital and lands, and budget for maintaining them, and appears in financial information on administration.

Economic capital of a fishing/cultivation node (row 135) is the total of human capital required for fishing and cultivation, fixed capital and lands, and money obtained by sales of food produced by using them, and appears in financial information on fishing and cultivation.

A natural forest node and a sea/lake node do not have economic capital.

Incidentally, natural capital of each node is described below although not being described in FIG. 7.

The natural capital of the forestry area node indicates the whole of a surrounding environment required for forestry, and is, for example, soil and a river required for circulation of nutrients for a forest for forestry. The natural capital includes also an influence from an adjacent natural forest (this applies also to other nodes).

The natural capital of the fields node indicates the whole of a surrounding environment required for production in fields, and is, for example, soil, a river that provides water for irrigation, organic substances and the like that come flying from the surroundings, and animals that provide organic substances and the like.

The natural capital of the park node is a forest, a pond, a marsh, a grassland, and soil in a park.

The natural capital of the revetment/dry riverbed node is a forest, a grassland, and soil in a site, and an effect to maintain a river edge.

The natural capital of the fishing/cultivation node is a sea and a lake in a surrounding environment.

The natural capital of the natural forest node is, in addition to the forest itself of the forest node, other natural environments that cause interaction between such nodes as a business place node, a forestry area node, and a fields node in the surroundings.

The natural capital of the sea/lake node is, in addition to the sea or lake itself of the sea/lake node, waterweeds, algae, fishes, and the like that live therein.

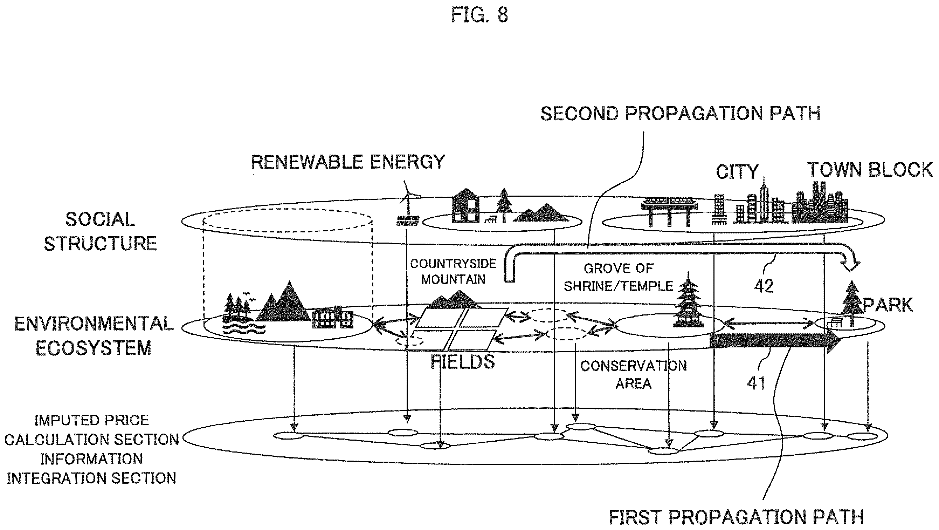

FIG. 8 is a schematic diagram of the first propagation path and the second propagation path. In an environmental ecosystem, a change in ecosystem functions at a certain conservation target spot propagates as a change in ecosystem functions at another conservation target spot through a first propagation path 41. The carrier of the propagation is in many cases a river, a lake or a marsh, wind and rain, or an animal or a plant other than the human. The distance of the propagation is relatively short, and the "certain conservation target spot" and the "other conservation target spot" are spatially adjacent to each other in many cases.

In a social structure, a change in ecosystem functions at a certain conservation target spot propagates as a change in ecosystem functions at another conservation target spot through a second propagation path 42. The carrier of the propagation is the human (corporation and household) as parties involved in a deal. The distance of the propagation is relatively long, and the "certain conservation target spot" and the "other conservation target spot" are spatially distant from each other in many cases although being connected by a land route, a rail route, an air route, or the like.

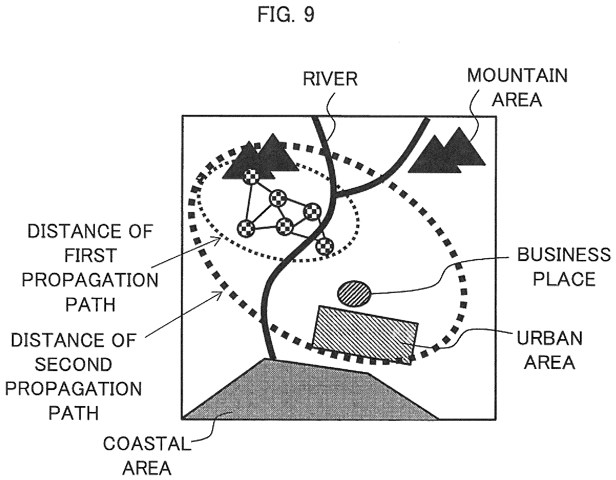

FIG. 9 is a diagram for explaining the propagation distance of the first propagation path and the second propagation path. The distance of the first propagation path is, for example, the distance between adjacent forests or between the upstream side and the downstream side of the same river. The distance of the second propagation path is, for example, the distance between a forest where a lumber corporation exists and an urban area where a corporation as a customer of the lumber corporation exists. In many cases, "distance of first propagation path < distance of second propagation path" is satisfied.

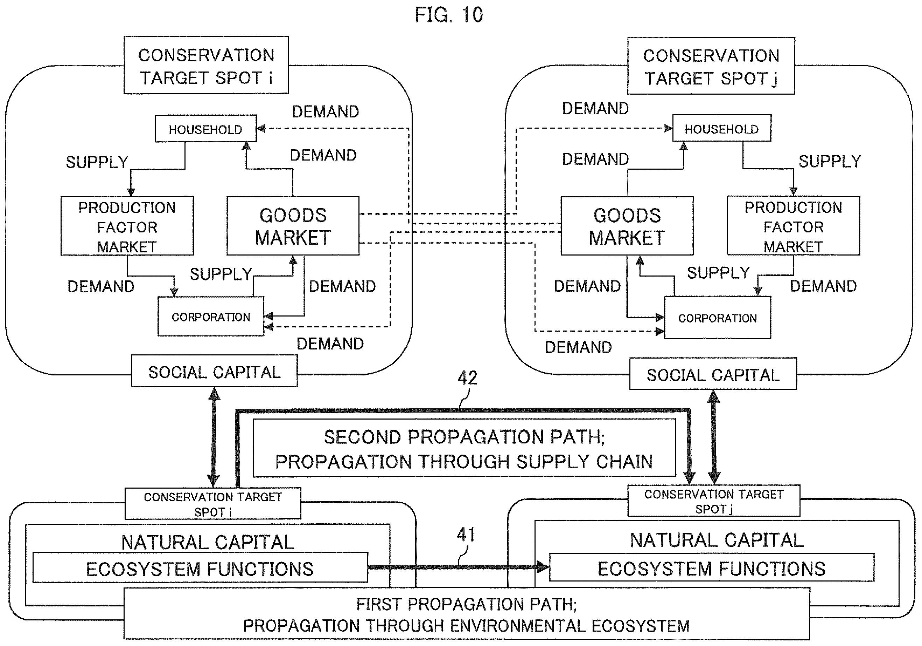

FIG. 10 is a relation diagram between conservation target spots of the first propagation path and the second propagation path. A conservation target spot i and a conservation target spot j exist. Ecosystem functions (the amount of carbon storage and the like) of the natural capital (forest and the like) at the conservation target spot i affect ecosystem functions of the natural capital of the conservation target spot j through the first propagation path 41. The first propagation path is, so to speak, workings of nature.

A corporation and a household exist at the conservation target spot i. The corporation provides goods (industrial products and the like) to the household through a goods market. The household provides production factors (labor force and the like) to the corporation through a production factor market. This also applies to the conservation target spot j. The "goods" as used herein are manufactured by consuming ecosystem functions. Not only the corporation and the household at the conservation target spot i but also the corporation and the household at the conservation target spot j participate in the goods market at the conservation target spot i. Not only the corporation and the household at the conservation target spot j but also the corporation and the household at the conservation target spot i participate in the goods market at the conservation target spot j.

The corporation and the household that make a deal on goods across different conservation target spots in this manner are the carriers of the propagation through the second propagation path 42. Although it is also possible that a production factor (labor force) moves across the production factor markets at different conservation target spots, the influence thereof on the ecosystem functions is small compared with a case of the goods market in many cases. The "social capital" means social infrastructures to allow a deal at each conservation target spot to be reached, such as markets and transportation facilities.

(Market Equilibrium)

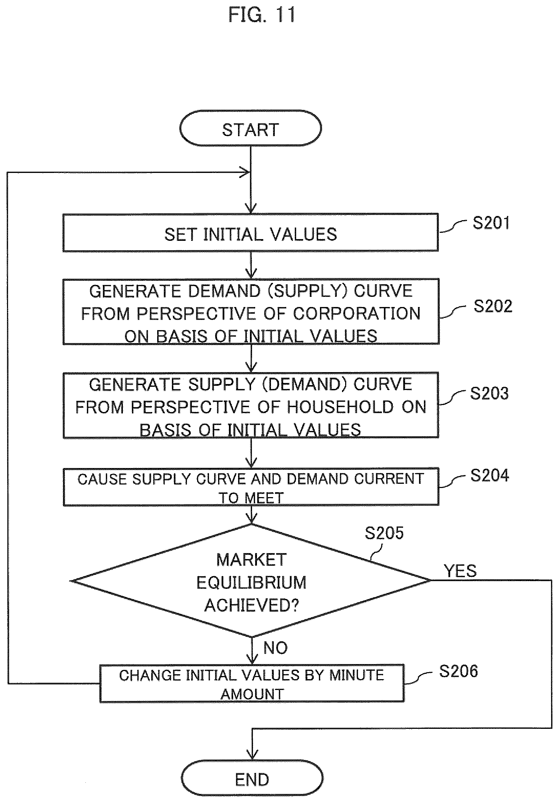

FIG. 11 is a flowchart for explaining a mechanism of market equilibrium.

In step S201, the information integration section 22 sets initial values. The initial values as used herein are initial values of a counterparty of a deal, an object of the deal (labor force or goods), the quantity of the deal, the price of the deal, and the like. The initial values at this stage do not necessarily ensure achievement of the market equilibrium.

In step S202, the information integration section 22 generates a demand (supply) curve from the perspective of a corporation on the basis of the initial values. In this step, conditions (bidding conditions or the like) under which the corporation side participates in a production factor market and a goods market in order to optimize the corporation's own interests are determined.

In step S203, the information integration section 22 generates a supply (demand) curve from the perspective of a household on the basis of the initial values. In this step, conditions (bidding conditions or the like) under which the household side participates in the production factor market and the goods market in order to optimize the household's own interests are determined.

In step S204, the information integration section 22 causes the supply curve and the demand curve to meet. Specifically, the information integration section 22 obtains a solution to a system of equations of the supply curve and the demand curve.

In step S205, the information integration section 22 determines whether or not the market equilibrium is achieved. The market equilibrium being achieved means that an intersection of the demand curve and the supply curve exists (a point at which the demand (price $\times$ quantity) of the production factor and the goods is equal to the supply (price $\times$ quantity) exists) and these price and quantity are stable enough to make it unnecessary to review the counterparty of the deal. When the market equilibrium is achieved (step S205 "YES"), the information integration section 22 stores the initial values at this stage in the auxiliary storage device 15, and ends the processing. In other cases (step S205 "NO"), the information integration section 22 advances the processing to step S206. The "initial values at this stage" as used herein are none other than initial values of variables of a "second constraint model" that ensures the achievement of the market equilibrium and is described later.

In step S206, the information integration section 22 changes the initial values by a minute amount. Specifically, the information integration section 22 employs, as new initial values, values obtained by adding or subtracting a predetermined increment to or from the initial values set in the immediately-previous step S201. Thereafter, the information integration section 22 returns the processing to step S201.

(Processing Procedure)

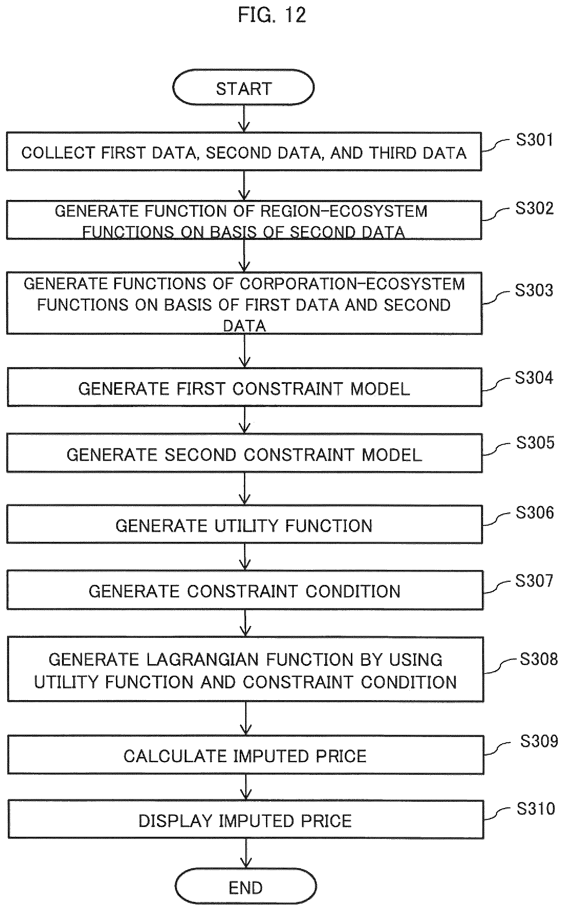

FIG. 12 is a flowchart of a processing procedure in the present embodiment.

In step S301, the collection section 21 of the data evaluation device 1 collects first data relating to business activities of an analysis target corporation, second data relating to an environmental ecosystem, and third data relating to social capital. Specifically, the collection section 21 collects the following pieces of information through the network I/F 16.

· Environmental information 31 (second data)
· Land use information 32 (in this information, "observation information" is the second data, and the other pieces of information are the third data)
· Conservation area information 33 (first data)
· Economic capital information 34 (first data)

Besides the above-described data, industry-by-industry statistical data (sales amount, the number of employees, and the like of agriculture, fishery, service industry, manufacturing industry, and the like) published by each local government and statistical data of the amount of logistics between regions exist as the third data.

In step S302, the information integration section 22 of the data evaluation device 1 generates a function $R_i(t)$ of region-ecosystem functions on the basis of the second data. Here, t represents a time point, and i represents a spot (the same applies hereinafter). $R_i(t)$ is a function of the time point and the spot. Moreover, $R_i(t)$ indicates spontaneous increase/decrease (natural resilience) of the ecosystem functions at the time point t at the spot i.

In step S303, the information integration section 22 of the data evaluation device 1 generates functions $X_i(t)$ and $Y_i(t)$ of corporation-ecosystem functions on the basis of the first data and the second data. $X_i(t)$ is a function of the time point and the spot. $X_i(t)$ indicates budget allotted to consumption of the ecosystem functions (production using the ecosystem functions) by corporate activities at the time point t at the spot i.

$Y_i(t)$ is also a function of the time point and the spot. $Y_i(t)$ indicates budget allotted to conservation of the ecosystem functions by corporate activities at the time point t at the spot i. In conclusion, $X_i(t)$ and $Y_i(t)$ indicate an influence that the business activities of the analysis target corporation have on the ecosystem functions.

In step S304, the information integration section 22 of the data evaluation device 1 generates a first constraint model. The following <Math. 1> and <Math. 2> represent the first constraint model.

[Math. 1]

$$\frac{d}{dt}Q_i(t) = \gamma R_i(t) + \alpha Y_i(t) - \beta X_i(t) + Q_{int}(t)$$

[Math. 2]

$$Q_{int}(t) = \sum_{j=1}^{N} i,j\,(d)$$

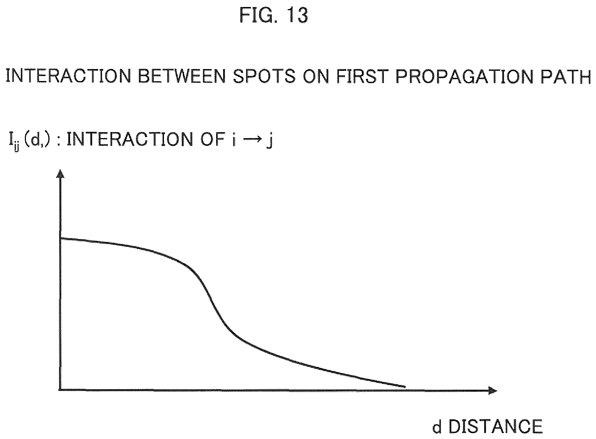

$Q_i(t)$ is the ecosystem functions at the time point t at the spot i. $Q_{int}(t)$ indicates the sum of advection of the ecosystem functions from other conservation target spots. $\alpha$, $\beta$, and $\gamma$ are weights. In conclusion, the first constraint model represents natural resilience of the ecosystem functions in the analysis target region, the influence that the business activities of the analysis target corporation have on the ecosystem functions, and the first propagation path of interaction of the ecosystem functions between the analysis target regions. Although being in the middle of the description of FIG. 12, the description temporarily shifts to a description of FIG. 13.

FIG. 13 is a diagram for explaining interaction between spots on the first propagation path. d of a horizontal axis represents the distance between the spot i and the spot j. A vertical axis denotes an influence $I_{i,j}(d)$ that the ecosystem functions at the spot i have on the ecosystem functions at the spot j. As d becomes shorter, $I_{i,j}(d)$ becomes larger. The description returns to FIG. 12.

In step S305, the information integration section 22 of the data evaluation device 1 generates the second constraint model on the basis of the first data and the third data. The second constraint model is a condition for the market equilibrium in step S205 in FIG. 11. The second propagation path is a path of propagation attributable to business activities (deal) of the household and the corporation. Accordingly, a condition that actually causes the market to achieve equilibrium among candidates for the condition, that is, the seller (buyer), the counterparty, the content, the quantity, and the price of the deal, becomes the second constraint model. That is, the second constraint model reflects the optimization condition of corporation behavior and the optimization condition of household behavior. Further, it can be said that, in FIG. 11, the information integration section 22 generates the condition that causes the market to achieve equilibrium, on the basis of the first data and the third data.

In step S306, the imputed price calculation section 23 of the data evaluation device 1 generates a utility function u defined in the following. The utility function u is defined as a function that increases when each of two factors, economic scale of the analysis target region and abundance of the ecosystem in the analysis target region, increases as indicated by <Math. 3>. Symbol "~" denotes approximation. The utility function u is a function including two variables of the economic scale of the analysis target region and the abundance of the ecosystem in the analysis target region. In the present embodiment, as described later, the imputed price calculation section 23 calculates the imputed price of the business activities of the analysis target corporation by using this utility function u (under a predetermined constraint condition g).

utility function u ~ economic scale of analysis target region $\times$ abundance of ecosystem in analysis target region

[Math. 3]

The economic scale of the analysis target region in <Math. 3> is the total of the economic capital amount of the household and the corporation in the analysis target region, the total amount of the goods market and the production factor market, or the sum of the total of the economic capital amount of the household and the corporation in the analysis target region and the total amount of the goods market and the production factor market.

As the economic scale of the analysis target region, labor capital and corporate capital are given. The labor capital is expressed by the following <Math. 4>. The corporate capital is expressed by the following <Math. 5>.

[Math. 4]

$$\sum_{m \in M} L_i^m = \overline{L_i}$$

[Math. 5]

$$\sum_{i \in I} \sum_{m \in M} K_i^m = \overline{K_i}$$

In <Math. 4> and <Math. 5>, $L_i^m$ and $K_i^m$ are the labor capital and the corporate capital of goods m in the analysis target region. An inner function that defines the total of these labor capital and corporate capital is referred to as social capital variables $G_i = (G_i^l, \cdots, G_i^s, \cdots, G_i^S)$ (s = 1 to S).

The abundance of the ecosystem in the analysis target region in <Math. 3> is specifically natural capital $R_i$ that contributes to economic activities, and is none other than the above-described function $R_i$ of region-ecosystem functions. Further, the natural capital $R_i$ that contributes to the economic activities is the amount of natural capital utilized by the corporation in a total $R_{i\_0}$ of natural capital existing at the spot i. A ratio $\gamma$ of $R_i$ to $R_{i\_0}$ is defined as indicated by the following <Math. 6>.

[Math. 6]

$$\gamma = R_i/R_{i\_0}$$

Here, when the relation between the natural capital, the ecosystem functions, and the ecosystem service is marshalled, the ecosystem service is a flow of the natural capital with respect to the natural capital indicating a stock amount. Moreover, the ecosystem service is obtained by combining a series of ecosystem functions. That is, with use of ecosystem functions $Q_i = (Q_i^1, \cdots, Q_i^k \cdots, Q_i^K)$, the natural capital $R_i$ that contributes to the economic activities can be expressed as the following <Math. 7> (k = 1 to K).

[Math. 7]

$$R_i = R_i(t, Q_i) = \gamma R_{i\_0}(t, Q_i)$$

Here, $Q_i^k$ is a quantitative variable of an ecosystem function k at the spot i. Although being a discrete expression, $Q_i^k$ may be a continuous expression with respect to the time point t and spatial x dimensions as required. In this case, $Q_i^k$ is expressed as $Q_i^k = Q_i^k(t, x_i)$. Moreover, it is possible to give an appropriate definition concerning the spot i and decide the relation with the spatial x dimensions. Specifically, when the coordinates of the spot i are defined as $x_i$ and dx is defined as $dx = x_{i+1} - x_i$, it is possible to express the spot i as a lattice point at each distance dx and define the ecosystem function with respect to each spot as $Q_i^k$

Here, the natural capital $R_i$ is limited to be the capital amount that contributes to the economic activities in the target region. Thus, internal variables of the ratio $\gamma$ thereof should be ones relating to the labor capital amount and the corporate capital amount. Therefore, $\gamma$ can be expressed as the following <Math. 8>.

[Math. 8]

$$\gamma = \gamma(t, G_i)$$

In step S307, the imputed price calculation section 23 of the data evaluation device 1 generates a constraint condition. The constraint condition includes the following two models.

· First constraint model (<Math. 1> and <Math. 2>)
· Second constraint model (market equilibrium model)

In step S308, the imputed price calculation section 23 of the data evaluation device 1 generates a Lagrangian function L expressed by the following <Math. 9> with use of the utility function u and the constraint condition g. $\lambda$ is a Lagrange multiplier. An inner function of the constraint condition g on $\lambda$ is invariably the same social capital variables $G_i$ and ecosystem functions Q as an inner function of the utility function u.

[Math. 9]

$$\mathcal{L}(t, \lambda, G_i, Q_i) = U(t, \lambda, G_i, Q_i) + \lambda g(t, G_i, Q_i)$$

In step S309, the imputed price calculation section 23 of the data evaluation device 1 solves a system of partial differential equations of the Lagrangian function to calculate the imputed price. Specifically, the imputed price calculation section 23 solves a system of partial differential equations of "each value obtained by partially differentiating the Lagrangian function L with respect to a respective one of the variables of the Lagrangian function and the Lagrange multiplier $\lambda$ = 0." As is well known in economics, when the variables of the Lagrangian function are production factors, the Lagrange multiplier $\lambda$ as the solution is the imputed price of the business activities of the analysis target corporation. That is, the imputed price calculation section 23 calculates, by using the utility function u, the imputed price of the business activities of the analysis target corporation under the constraint condition g including the influence on the ecosystem functions Q through the first propagation path and the second propagation path.

In step S310, the output section 24 of the data evaluation device 1 outputs (displays) the imputed price on the output device 13. Thereafter, the processing procedure is ended.

(Modification 1)

The second data can be obtained mainly from government offices. In contrast, the first data and the third data are in many cases provided from private business subjects (corporations, investors, and the like). In this case, availability of the fulfilling first data and third data greatly contributes to accurate calculation of the imputed price.

Thus, the collection section 21 solicits subjects that provide the first data or the third data. Specifically, the collection section 21 releases information indicating the solicitation of the subjects that provide the first data or the third data through the network I/F 16 (uploads the information to the Internet or the like).

Moreover, the collection section 21 gives economic incentive to the solicited subject depending on an influence that the first data or the third data provided by the solicited subject has on the calculated imputed price. Specifically, the collection section 21 calculates a difference (positive value) obtained by deducting the imputed price calculated immediately before the provision of the first data or the third data by this subject from the imputed price calculated immediately after the provision of the first data or the third data by this subject. When this difference exceeds a predetermined threshold, the collection section 21 calculates the incentive (electronic money or the like) depending on the excess amount, and transmits the calculated incentive to any piece of equipment operated by this subject.

Further, the data evaluation device 1 executes the flowchart of FIG. 12, triggered by the collection of the first data or the third data from the solicited subject. That is, the provision of the new data becomes the trigger for the execution of the processing of step S302 and the subsequent steps. An event other than the collection of the first data or the third data may trigger the execution of the flowchart of FIG. 12, and the flowchart of FIG. 12 is executed at an appropriate timing.

(Modification 2)

The imputed price calculation section 23 may calculate the imputed price in a future time series. A user sometimes wants to not only know the imputed price at the current time point but also know the imputed price in the future time series. In the calculation of the imputed price by the Lagrangian function, the imputed price at a time point of coincidence with the time of input data is output. Meanwhile, a calculation method for the imputed price using the Hamiltonian (Hamilton function), referred to as dynamic programming, can output the imputed price of a period that is N periods after the time of input data. Thus, the imputed price calculation section 23 calculates the imputed price in the future time series by using the Hamilton function. A relation between the Hamilton function expressed by <Math. 10> and the Lagrangian function expressed by <Math. 11> is described below.

[Math. 10]

$$\mathcal{H}(t, \lambda, G_i, Q_i) = U(t, G_i, Q_i) + \lambda(t)f(t, G_i, Q_i)$$

[Math. 11]

$$\mathcal{L}(t, \lambda, G_i, Q_i) = \mathcal{H}(t, \lambda, G_i, Q_i) + \mu(t)g(t, G_i, Q_i)$$

Here, a function f is a function representing increase and decrease in capital relating to the production factors. $\lambda(t)$ is the imputed price of the current period. $\mu(t)$ corresponds to the imputed price obtained by evaluating the imputed price $\lambda(t)$ of a t-th period in an initial period (0-th period). Assuming that a planned period is until a T-th period, the imputed price calculation section 23 can indicate how the imputed price increases and decreases during the period until the T-th period by calculating $\lambda(t)$. Moreover, the imputed price calculation section 23 can execute absolute evaluation of the increase and decrease from the initial period and indicate the increase and decrease by calculating $\mu(t)$ of the period until the T-th period at the time of planning (0-th period).

From the above calculation result, a user (investor or corporation) can recognize information on time evolution concerning the imputed price of an ecosystem conserved as part of corporate activities. The corporation can make a conservation plan or the like according to the information, and the investor can utilize the information as an index to estimate future corporate value.

The present invention is not limited to the above-described embodiment, and various modifications are included therein. For example, the above-described embodiment has been explained in detail in order to explain the present invention in an easy-to-understand manner, and is not necessarily limited to one including all configurations explained. Further, it is possible to replace part of a configuration of a certain embodiment by a configuration of another embodiment. Moreover, it is also possible to add a configuration of a certain embodiment to a configuration of another embodiment. In addition, it is possible to execute addition, deletion, or substitution of another configuration concerning part of a configuration of each embodiment.

Further, concerning the above-described respective configurations, functions, processing sections, and the like, some or all of them may be implemented by hardware through, for example, designing with an integrated circuit (IC), or the like. Moreover, the above-described respective configurations, functions, and the like may be implemented by software through interpretation and execution of a program that implements the respective functions by a processor. Pieces of information such as the program that implements the respective functions, tables, and files can be put in a recording device such as a memory, a hard disk, or a solid state drive (SSD) or a recording medium such as an IC card or a secure digital (SD) card.

Further, as control lines and information lines, those thought to be required in terms of description are depicted, and not all control lines and information lines are depicted in terms of the product. It may be deemed that, in practice, almost all configurations are mutually connected.

Claims

1. A data evaluation device (1) comprising:

a collection section (21) that collects first data relating to business activities of an analysis target corporation, second data relating to an environmental ecosystem, and third data relating to social capital;
an information integration section (22) that

generates a function of region-ecosystem functions expressing ecosystem functions in an analysis target region, as a function of a time point and a spot, on a basis of the second data,
generates a function of corporation-ecosystem functions expressing an influence that the analysis target corporation has on the ecosystem functions in the analysis target region, as a function of the time point and the spot, on a basis of the first data and the second data,

generates a first constraint model representing natural resilience of the ecosystem functions in the analysis target region, the influence that the analysis target corporation has on the ecosystem functions, and a first propagation path of interaction of the ecosystem functions between the analysis target regions, and generates a second constraint model representing a second propagation path of an influence that the business activities of the analysis target corporation have on the ecosystem functions through a supply chain, on a basis of the first data and the third data;

an imputed price calculation section (23) that calculates an imputed price of the business activities of the analysis target corporation under a constraint condition including an influence on the ecosystem functions through the first propagation path and the second propagation path by using a utility function including two variables of economic scale of the analysis target region and abundance of an ecosystem in the analysis target region; and an output section (24) that displays the imputed price.

2. The data evaluation device (1) according to claim 1, wherein
the collection section (21) solicits a subject that provides the first data or the third data.

3. The data evaluation device (1) according to claim 2, wherein
the collection section (21) gives economic incentive to the solicited subject depending on an influence that the first data or the third data provided by the solicited subject has on the calculated imputed price.

4. The data evaluation device (1) according to claim 2, wherein

the collection section (21) collects the first data or the third data from the solicited subject,
the information integration section (22) generates the function of region-ecosystem functions, the function of corporation-ecosystem functions, the first constraint model, and the second constraint model,
the imputed price calculation section (23) calculates the imputed price, and
the output section (24) displays the imputed price.

5. The data evaluation device (1) according to claim 1, wherein
the imputed price calculation section (23) calculates the imputed price in a future time series.

6. A data evaluation method comprising:

by a collection section (21) of a data evaluation device (1), collecting first data relating to business activities of an analysis target corporation, second data relating to an environmental ecosystem, and third data relating to social capital;
by an information integration section (22) of the data evaluation device (1),

generating a function of region-ecosystem functions expressing ecosystem functions in an analysis target region, as a function of a time point and a spot, on a basis of the second data;
generating a function of corporation-ecosystem functions expressing an influence that the analysis target corporation has on the ecosystem functions in the analysis target region, as a function of the time point and the spot, on a basis of the first data and the second data;
generating a first constraint model representing natural resilience of the ecosystem functions in the analysis target region, the influence that the analysis target corporation has on the ecosystem functions, and a first propagation path of interaction of the ecosystem functions between the analysis target regions;
generating a second constraint model representing a second propagation path of an influence that the business activities of the analysis target corporation have on the ecosystem functions through a supply chain, on a basis of the first data and the third data;

by an imputed price calculation section (23) of the data evaluation device (1), calculating an imputed price of the business activities of the analysis target corporation under a constraint condition including an influence on the ecosystem functions through the first propagation path and the second propagation path by using a utility function including two variables of economic scale of the analysis target region and abundance of an ecosystem in the analysis target region; and
by an output section (24) of the data evaluation device (1), displaying the imputed price.

FIG. 1

DATA EVALUATION DEVICE

14

11 — CENTRAL CONTROL DEVICE

12 — INPUT DEVICE

13 — OUTPUT DEVICE

16 — NETWORK I/F

COLLECTION SECTION — 21

INFORMATION INTEGRATION SECTION — 22

IMPUTED PRICE CALCULATION SECTION — 23

OUTPUT SECTION — 24

MAIN STORAGE DEVICE

15

31 — ENVIRONMENTAL INFORMATION

32 — LAND USE INFORMATION

33 — CONSERVATION AREA INFORMATION

34 — ECONOMIC CAPITAL INFORMATION

AUXILIARY STORAGE DEVICE

1

## FIG. 2

LANDSCAPE OF ANALYSIS TARGET REGION

FORESTRY 521
AREA

RIVER 532

531 BUSINESS PLACE

FIELDS
522

NATURAL
530 FOREST

REVETMENT/
DRY RIVERBED

BUSINESS

529 PLACE

523

528
URBAN AREA

FIELDS
524

527
PARK

SEA/LAKE
525

526 FISHING/CULTIVATION

## FIG. 3

NETWORK STRUCTURE OF ANALYSIS TARGET REGION

FORESTRY
AREA NODE 551

RIVER EDGE
571

SUBURBAN-
TYPE EDGE
572

560 BUSINESS PLACE NODE

559 NATURAL FOREST
NODE

FIELDS NODE
552

558 BUSINESS PLACE
NODE

573 URBAN AREA
EDGE

553

557 PARK NODE

REVETMENT/DRY
RIVERBED NODE

556
FIELDS NODE

554
SEA/LAKE NODE

555
FISHING/CULTIVATION NODE

FIG. 4

31

101  102

| ANIMAL INHABITATION INFORMATION | OBSERVATION INFORMATION |
|---|---|
| | ·SOUND DATA (SOUND, DATE AND TIME, SPOT) |
| | ·IMAGE DATA (IMAGE, DATE AND TIME, SPOT) |
| | STATISTICAL DATA |
| | ·STATISTICAL DATA OBTAINED BY PERIODIC GROUND OBSERVATION BY NATIONAL/LOCAL GOVERNMENT |
| VEGETATION INFORMATION (PRIMARY PRODUCTION) | OBSERVATION INFORMATION |
| | ·SATELLITE IMAGE (IMAGE, DATE AND TIME, SPOT) |
| | STATISTICAL DATA |
| | ·STATISTICAL DATA OBTAINED BY PERIODIC GROUND OBSERVATION BY NATIONAL/LOCAL GOVERNMENT |
| MATERIAL BALANCE INFORMATION (AMOUNT OF CARBON STORAGE) | ·VEGETATION INFORMATION |
| | ·SHAPE INFORMATION OF TREES (INFRARED LASER MEASUREMENT DATA RELATING TO THICKNESS AND HEIGHT OF TRUNK OF TREE, DATE AND TIME, SPOT INFORMATION) |
| MATERIAL BALANCE INFORMATION (WATER PURIFYING EFFECT, AMOUNT OF NUTRIENT SALT) | ·WATER FLOW RATE DATA OF RIVER AND LAKE AND MARSH |
| | (FLOW SPEED, WATER DEPTH, YEAR-MONTH-DATE-TIME, SPOT INFORMATION) |
| | ·WATER QUALITY DATA OF RIVER AND LAKE AND MARSH |
| | (AMOUNT OF DISSOLVED OXYGEN, ph, NITROGEN CONTENT, DATE AND TIME, SPOT INFORMATION) |

103 104 105 106

## FIG. 5

| LAND USE DIAGRAM | OBSERVATION INFORMATION |
| --- | --- |
| | ·SATELLITE IMAGE (IMAGE, DATE AND TIME, SPOT) |
| | STATISTICAL DATA |
| | ·STATISTICAL DATA OBTAINED BY PERIODIC GROUND OBSERVATION BY NATIONAL/LOCAL GOVERNMENT |
| | ·STATISTICAL DATA RELATING TO FIELDS, INDUSTRIAL ZONE, AND INDUSTRIES SUCH AS FISHING IN REGION IN LAND USE. STATISTICAL DATA PARTICULARLY RELATES TO SCALE AND SALES OF EACH BUSINESS TYPE. |

## FIG. 6

| CONSERVATION AREA ENVIRONMENTAL INFORMATION | INFORMATION RELATING TO ENVIRONMENTAL ECOSYSTEM OF CONSERVATION TARGET SPOT |
| --- | --- |
| | DATA RELATING TO ENVIRONMENTAL ECOSYSTEM INDIVIDUALLY OWNED BY OWNER |
| CONSERVATION AREA GEOGRAPHIC INFORMATION | GEOGRAPHIC INFORMATION ON CONSERVATION TARGET SPOT OWNED BY OWNER (LOT, CENTER COORDINATES) |
| CONSERVATION SCENARIO INFORMATION | ·CONSERVATION BUDGET |
| | ·CONSERVATION ACTION AND PERFORMANCE TIMING OF ACTION |
| | ·CURRENT VALUE AND TARGET VALUE OF VARIABLE OF SPECIFIC ECOSYSTEM FUNCTION |
| | ·PAST TRACK RECORD MADE BY CONSERVATION ACTION |

## FIG. 7

34

| | | |
|---|---|---|
| 131 | ECONOMIC CAPITAL OF FORESTRY AREA NODE | MANAGEMENT INFORMATION ON FORESTRY CORPORATION |
| | | HUMAN CAPITAL: EMPLOYEES |
| | | FIXED CAPITAL: RESERVED FOREST, EQUIPMENT FOR WOOD PROCESSING, EQUIPMENT OF LOGGING OPERATION, TRANSPORTATION EQUIPMENT, RESOURCES FOR EDUCATION OF HUMAN CAPITAL, ETC. |
| | | MONEY OBTAINED BY SALES OF PRODUCED WOOD: SALES AMOUNT AND INTERNAL RESERVES |
| 132 | ECONOMIC CAPITAL OF FIELDS NODE | MANAGEMENT INFORMATION ON AGRICULTURAL CORPORATION |
| | | HUMAN CAPITAL: EMPLOYEES |
| | | FIXED CAPITAL: RESERVED FIELDS, EQUIPMENT FOR PRODUCTION AND HARVEST, IRRIGATION FACILITIES, TRANSPORTATION EQUIPMENT, RESOURCES FOR EDUCATION OF HUMAN CAPITAL, ETC. |
| | | RESERVED MONEY: SALES AMOUNT AND INTERNAL RESERVES |
| 133 | ECONOMIC CAPITAL OF PARK NODE | MANAGEMENT INFORMATION ON PARK MANAGEMENT BUSINESS OPERATOR |
| | | HUMAN CAPITAL: EMPLOYEES |
| | | FIXED CAPITAL: PARK SITE, FACILITIES REQUIRED FOR MAINTENANCE OF PARK, TRANSPORTATION EQUIPMENT, RESOURCES FOR EDUCATION OF HUMAN CAPITAL, ETC. |
| | | RESERVED MONEY: PUBLIC BUDGET FOR CONSERVATION |
| 134 | ECONOMIC CAPITAL OF REVETMENT/DRY RIVERBED NODE | MANAGEMENT INFORMATION ON RIVER MANAGEMENT BUSINESS OPERATOR |
| | | HUMAN CAPITAL: EMPLOYEES |
| | | FIXED CAPITAL: DRY RIVERBED SITE, FACILITIES REQUIRED FOR MAINTENANCE, TRANSPORTATION EQUIPMENT, RESOURCES FOR EDUCATION OF HUMAN CAPITAL, ETC. |
| | | RESERVED MONEY: PUBLIC BUDGET FOR MAINTENANCE |
| 135 | ECONOMIC CAPITAL OF FISHING/CULTIVATION NODE | MANAGEMENT INFORMATION ON FISHERY CORPORATION |
| | | HUMAN CAPITAL: EMPLOYEES |
| | | FIXED CAPITAL: RESERVED SHIP, EQUIPMENT FOR PROCESSING OF FISH AND SHELLFISH, EQUIPMENT REQUIRED FOR FISHING, TRANSPORTATION EQUIPMENT, RESOURCES FOR EDUCATION OF HUMAN CAPITAL, RESOURCES FOR CULTIVATION, ETC. |
| | | RESERVED MONEY: SALES AMOUNT AND INTERNAL RESERVES |

FIG. 8

EP 4 700 672 A1

## FIG. 9

FIG. 10

CONSERVATION TARGET SPOT j

HOUSEHOLD
SUPPLY → PRODUCTION FACTOR MARKET → DEMAND
SUPPLY → CORPORATION
GOODS MARKET
SUPPLY
DEMAND
SOCIAL CAPITAL

CONSERVATION TARGET SPOT i

HOUSEHOLD
SUPPLY → PRODUCTION FACTOR MARKET → DEMAND
GOODS MARKET
SUPPLY → CORPORATION
DEMAND
SOCIAL CAPITAL

42 — SECOND PROPAGATION PATH; PROPAGATION THROUGH SUPPLY CHAIN

CONSERVATION TARGET SPOT j
NATURAL CAPITAL
ECOSYSTEM FUNCTIONS

CONSERVATION TARGET SPOT i
NATURAL CAPITAL
ECOSYSTEM FUNCTIONS

41 — FIRST PROPAGATION PATH; PROPAGATION THROUGH ENVIRONMENTAL ECOSYSTEM

FIG. 11

```
                    ┌─────────────┐
                    │    START    │
                    └──────┬──────┘
                           │
   ┌───────────────────────┤
   │                       ▼
   │      ┌──────────────────────────────────────┐
   │      │          SET INITIAL VALUES          │─── S201
   │      └───────────────────┬──────────────────┘
   │                          ▼
   │      ┌──────────────────────────────────────┐
   │      │   GENERATE DEMAND (SUPPLY) CURVE      │
   │      │ FROM PERSPECTIVE OF CORPORATION       │─── S202
   │      │      ON BASIS OF INITIAL VALUES       │
   │      └───────────────────┬──────────────────┘
   │                          ▼
   │      ┌──────────────────────────────────────┐
   │      │   GENERATE SUPPLY (DEMAND) CURVE      │
   │      │ FROM PERSPECTIVE OF HOUSEHOLD ON      │─── S203
   │      │      BASIS OF INITIAL VALUES          │
   │      └───────────────────┬──────────────────┘
   │                          ▼
   │      ┌──────────────────────────────────────┐
   │      │ CAUSE SUPPLY CURVE AND DEMAND CURRENT │─── S204
   │      │                TO MEET               │
   │      └───────────────────┬──────────────────┘
   │                          ▼               S205
   │                   ◇─────────────◇
   │                  ╱    MARKET     ╲      YES
   │                 ◇   EQUILIBRIUM    ◇─────────────┐
   │                  ╲   ACHIEVED?    ╱              │
   │                   ◇─────────────◇               │
   │                          │ NO                    │
   │      ┌──────────────────────────────────────┐   │
   │      │ CHANGE INITIAL VALUES BY MINUTE       │─── S206
   └──────│                AMOUNT                │   │
          └──────────────────────────────────────┘   │
                                                      ▼
                                            ┌─────────────┐
                                            │     END     │
                                            └─────────────┘
```

## FIG. 12

```
              ┌─────────────┐
              │    START    │
              └─────────────┘
                     │
                     ▼
┌──────────────────────────────────────────────┐
│  COLLECT FIRST DATA, SECOND DATA, AND THIRD DATA │──── S301
└──────────────────────────────────────────────┘
                     │
                     ▼
┌──────────────────────────────────────────────┐
│  GENERATE FUNCTION OF REGION-ECOSYSTEM        │──── S302
│  FUNCTIONS ON BASIS OF SECOND DATA            │
└──────────────────────────────────────────────┘
                     │
                     ▼
┌──────────────────────────────────────────────┐
│  GENERATE FUNCTIONS OF CORPORATION-ECOSYSTEM  │──── S303
│  FUNCTIONS ON BASIS OF FIRST DATA AND SECOND  │
│  DATA                                         │
└──────────────────────────────────────────────┘
                     │
                     ▼
┌──────────────────────────────────────────────┐
│  GENERATE FIRST CONSTRAINT MODEL              │──── S304
└──────────────────────────────────────────────┘
                     │
                     ▼
┌──────────────────────────────────────────────┐
│  GENERATE SECOND CONSTRAINT MODEL             │──── S305
└──────────────────────────────────────────────┘
                     │
                     ▼
┌──────────────────────────────────────────────┐
│  GENERATE UTILITY FUNCTION                    │──── S306
└──────────────────────────────────────────────┘
                     │
                     ▼
┌──────────────────────────────────────────────┐
│  GENERATE CONSTRAINT CONDITION                │──── S307
└──────────────────────────────────────────────┘
                     │
                     ▼
┌──────────────────────────────────────────────┐
│  GENERATE LAGRANGIAN FUNCTION BY USING        │──── S308
│  UTILITY FUNCTION AND CONSTRAINT CONDITION    │
└──────────────────────────────────────────────┘
                     │
                     ▼
┌──────────────────────────────────────────────┐
│  CALCULATE IMPUTED PRICE                      │──── S309
└──────────────────────────────────────────────┘
                     │
                     ▼
┌──────────────────────────────────────────────┐
│  DISPLAY IMPUTED PRICE                        │──── S310
└──────────────────────────────────────────────┘
                     │
                     ▼
              ┌─────────────┐
              │     END     │
              └─────────────┘
```

FIG. 13

INTERACTION BETWEEN SPOTS ON FIRST PROPAGATION PATH

$I_{ij}(d,)$ : INTERACTION OF i → j

d DISTANCE

Europäisches
Patentamt
European
Patent Office
Office européen
des brevets

## EUROPEAN SEARCH REPORT

**Application Number**

EP 25 18 0424

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/289381 A1 (MCCARSON BRIAN [US]) 14 September 2023 (2023-09-14) <br> * figures 1, 2, 7 * <br> * paragraphs [0021] - [0024], [0032] - paragraph [0036] * <br> * paragraphs [0041] - [0044], [0074] - paragraph [0077] * <br> ----- | 1-6 | INV. <br> G06Q10/0637 <br> G06Q30/0201 <br> G06Q40/06 |
| X | US 2023/068107 A1 (DE JONG ROGIER [CH] ET AL) 2 March 2023 (2023-03-02) <br> * figures 1,19A-21 * <br> * paragraphs [0019], [0021] - paragraphs [0023], [0045] - [0052] * <br> * paragraph [0064] - paragraphs [0080], [0084] * <br> * paragraphs [0094] - [0101], [0104] - paragraph [0109] * <br> ----- | 1-6 | |
| X | US 2023/161814 A1 (MCCARSON BRIAN [US]) 25 May 2023 (2023-05-25) <br> * figures 1, 2, 7 * <br> * paragraphs [0024] - [0027], [0032] - paragraph [0036] * <br> * paragraphs [0041] - [0044], [0097] - paragraph [0106] * <br> ----- | 1-6 | TECHNICAL FIELDS SEARCHED (IPC) <br><br> G06Q |
| X | US 2021/264225 A1 (MCCARSON BRIAN [US]) 26 August 2021 (2021-08-26) <br> * figures 1, 2, 7 * <br> * paragraphs [0019] - [0022], [0027] - paragraph [0031] * <br> * paragraphs [0036] - [0040], [0066] - paragraph [0075] * <br> ----- | 1-6 | |

The present search report has been drawn up for all claims

| Place of search | Date of completion of the search | Examiner |
|---|---|---|
| Munich | 24 October 2025 | Krafft, Gerald |

EPO FORM 1503 03.82 (P04C01)

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................
& : member of the same patent family, corresponding
    document

## ANNEX TO THE EUROPEAN SEARCH REPORT
## ON EUROPEAN PATENT APPLICATION NO.

EP 25 18 0424

This annex lists the patent family members relating to the patent documents cited in the above-mentioned European search report.
The members are as contained in the European Patent Office EDP file on
The European Patent Office is in no way liable for these particulars which are merely given for the purpose of information.

24-10-2025

| Patent document cited in search report | Publication date | Patent family member(s) | Publication date |
|---|---|---|---|
| US 2023289381 A1 | 14-09-2023 | NONE | |
| US 2023068107 A1 | 02-03-2023 | EP 4217955 A1<br>US 2023068107 A1<br>WO 2022063839 A1 | 02-08-2023<br>02-03-2023<br>31-03-2022 |
| US 2023161814 A1 | 25-05-2023 | NONE | |
| US 2021264225 A1 | 26-08-2021 | US 2021264225 A1<br>US 2022318577 A1 | 26-08-2021<br>06-10-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023058857 A

- WO 2013141252 A